# EUROPÄISCHE PATENTSCHRIFT

(11) **EP 3 580 024 B1**
(45) Veröffentlichungstag und Bekanntmachung des Hinweises auf die Patenterteilung: **22.12.2021**
(21) Anmeldenummer: 18704525.7
(22) Anmeldetag: 08.02.2018
(51) Int. Cl.: B26B 13/16, B23D 29/02

(54) **SCHERE**
SHEARS
SÉCATEUR

(30) Priorität: 13.02.2017 DE 102017102800; 10.07.2017 DE 102017115366
(43) Veröffentlichungstag der Anmeldung: 18.12.2019
(73) Patentinhaber: Knipex-Werk C. Gustav Putsch KG, 42349 Wuppertal (DE)
(72) Erfinder: HEINSOHN, Andreas, 42369 Wuppertal (DE)
(74) Vertreter: Müller, Enno
(86) Internationale Anmeldenummer: PCT/EP2018/053168
(87) Internationale Veröffentlichungsnummer: WO 2018/146191

(56) Entgegenhaltungen:
- WO-A1-94/10829
- GB-A- 596 769
- US-A- 828 110
- US-A- 4 031 621

## Beschreibung

### Gebiet der Technik

Die Erfindung betrifft eine Schere mit zwei Scherenschenkeln, die jeweils an ihrem einen Ende einen Griffbereich aufweisen und an ihrem anderen Ende eine Scherenkante, wobei die Scherenschenkel weiter in einem Drehgelenk verbunden sind, mit einem feststehenden Scherenschenkel, der bei einer Öffnungs- und Schließbewegung relativ zu dem Drehgelenk feststehend ist, und einem beweglichen Scherenschenkel, wobei die Scherenschenkel anschlagbegrenzt zwischen einer Öffnungs- und einer Schließstellung bewegbar sind und die Scherenkanten in der Schließstellung über im Wesentlichen ihrer gesamten Länge aneinander vorbei bewegt sind.

### Stand der Technik

Scheren der in Rede stehenden Art sind bekannt, so bspw. in Form von Drahtseilscheren. Drahtseilscheren werden mitunter auch als Zangen bezeichnet. Zum Stand der Technik wird auch auf die DE 10 2010 016 057 A1 verwiesen.

Aus der US 4 031 621 A ist eine Schere bekannt, bei welcher die Scherenschenkel anschlagbegrenzt zwischen einer Öffnungs- und einer Schließstellung bewegbar sind und die Scherenkanten in der Schließstellung über im Wesentlichen ihre gesamte Länge aneinander vorbei bewegt sind.

Bspw. bei einem Schneiden von Drahtseilen oder sonstigen zu hohen Scherkräften führenden Schnittgütern kann sich bei Scheren der bezeichneten Art eine Verwindung im Bereich zumindest eines Schenkels einstellen. Eine solche Verwindung kann zu einem Verklemmen der Schere und/oder einem unsauberen bis hin zu einem unvollständigen Schnitt führen.

### Zusammenfassung der Erfindung

Ausgehend von dem dargelegten Stand der Technik stellt sich der Erfindung die Aufgabe, eine Schere anzugeben, die auch bei einem hohe Scherkräfte verlangenden Schneidgut eine funktionssichere Handhabung ermöglicht bei darüber hinaus möglichst gutem Schnittergebnis.

Diese Aufgabe ist zunächst beim Gegenstand des Anspruches 1 gelöst, wobei darauf abgestellt ist, dass der feststehende oder bewegliche Scherenschenkel zu dem beweglichen oder feststehenden Scherenschenkel griffseitig zu dem Drehgelenk beidseitig plattenartig abstützend in einem Übergriff zu dem beweglichen bzw. feststehenden Scherenschenkel verläuft, wobei die Scherenschenkel weiter in ihrem im geschlossenen Zustand, d.h. in der Schließstellung, übereinander gefahrenen Bereich jeweils aneinander liegende Flächenbereiche aufweisen und auf der (bezogen auf das Drehgelenk griffseitig) gegenüberliegenden Seite jeweils freiliegend sind und dass die Abstützung durch eine zweifache Verbindung des in Breitenrichtung des abgestützten Schenkels diesen auf einer Breitseite übergreifenden plattenartigen Bereichs mit dem abstützenden Scherenschenkel erreicht ist.

Diese Aufgabe ist weiter beim Gegenstand des Anspruches 2 gelöst, wobei darauf abgestellt ist, dass eine den einen Scherenschenkel abgewandt zu dem anderen Scherenschenkel übergreifende Abstützplatte vorgesehen ist, dass die Abstützplatte mit dem andere Scherenschenkel unter Belassung eines Durchgreifschlitzes verbunden ist, wobei der Durchgreifschlitz durch aufeinander zuweisende Flachseiten des anderen Scherenschenkels und der Abstützplatte begrenzt ist, wobei eine in einer Erstreckungsrichtung einer Drehachse betrachtete Schlitzbreite des Durchgreifschlitzes der in selber Richtung betrachteten Dicke des anderen Scherenschenkels (3) in den Durchgreifschlitz durchsetzenden Bereich im Wesentlichen entspricht und das an dem einen Scherenschenkel ein Anschlagstift angeordnet ist, der sich in Richtung der Drehachse erstreckt und mit einer zugewandten Randfläche der Abstützplatte anschlagbegrenzend zusammenwirkt.

Zufolge dieser Ausgestaltung ist eine funktionssichere Ausgestaltung einer Schere angegeben. Insbesondere im Zuge eines Schneidprozesses ist hierdurch eine sichere, bevorzugt in Erstreckungsrichtung der Drehachse betrachtete beidseitige Abstützung des Bereiches des einen Schenkels an dem Bereich des anderen Schenkels gegeben. Jenseits der Drehachse, gesehen von der Griffseite der Scherenschenkel, auf der gegenüberliegenden Seite bezüglich der übereinandergefahrenen Bereiche, liegen die Scherenschenkel jedenfalls in der Schließstellung der Zange frei. Somit sind in dieser Stellung insbesondere die Bereiche der Scherenkanten an ihren jeweiligen - in Richtung der Drehachse gesehen - Außenflächen freiliegend.

Die beidseitige Abstützung ist somit bevorzugt im gesamten Bereich der bewegbaren Scherenkanten, soweit sie aneinander vorbei bewegbar sind, nicht gegeben.

Die an die Scherenkanten in Drehrichtung der Scherenschenkel anschließenden und in Ausrichtung der Drehachse aufeinander zu weisenden Flächenbereiche der Scherenschenkel liegen in der Scheren-Schließstellung aneinander an. Die in Ausrichtung der Drehachse jeweils nach außen und somit voneinander weg weisenden Seiten, insbesondere die sich an die Scherenkante in Drehrichtung der Scherenschenkel anschließenden außenliegenden Flächenbereiche, liegen in dieser Scheren-Schließstellung frei, sind entsprechend nicht überdeckt. Hieraus ergibt sich im Schneidenbereich eine handhabungsgünstige schlanke Bauform der Schere.

Weiter kann vorgesehen sein, dass in geschlossenem Zustand in einer Projektion in Richtung einer Drehachse des Drehgelenks die Scherenkanten V-förmig öffnend verlaufen. Die V-Spitze ist bevorzugt dem Drehgelenk zugewandt ausgebildet. Von da ausgehend erstrecken sich die Scherenkanten im geschlossenen Zustand in einem spitzen Winkel zueinander, bspw. in einem Winkel von etwa 10°, 15° oder bis hin zu 30°.

Auch kann vorgesehen sein, dass die Länge einer Scherenkante, welche die andere Scherenkante in geschlossenem Zustand überfahren hat, kleiner ist als eine quer zu einer Längserstreckung des abgestützten Schenkels in den abgestützten Bereich gemessene größte Breite, über welche der abgestützte Schenkel beidseitig abgestützt ist. So kann die Länge der Scherenkante bspw. einem Zehntel bis neun Zehntel, weiter beispielsweise drei Zehntel bis sechs Zehntel der vorbeschriebenen Breite entsprechen. Die größte Breite ergibt sich bevorzugt quergerichtet zu einer Längsausrichtung des abgestützten Schenkels im abgestützten Bereich und/oder in Längsrichtung des abstützenden Schenkels im abstützenden Bereich.

Zudem kann vorgesehen sein, dass die Abstützung durch eine zweifache Verbindung des in Breitenrichtung des abgestützten Schenkels diesen auf einer Breitseite übergreifenden plattenartigen Bereichs mit dem abstützenden Scherenschenkel erreicht ist.

Die Verbindung kann erreicht sein bspw. durch Vernietung oder Verschraubung, alternativ durch Verschweißung oder durch eine hochfeste Verklebung. Weiter kann die Verbindung gegeben sein durch eine einstückige, ggf. und auch bevorzugt materialeinheitliche Ausgestaltung des Abstützabschnittes und des damit verbundenen Schenkels.

In diesem Zusammenhang kann weiter vorgesehen sein, dass die Verbindung mindestens je einmal auf jeder Seite des abgestützten Schenkels gegeben ist. Alternativ wird diesbezüglich vorgeschlagen, dass die Verbindung nur auf einer Seite des abgestützten Schenkels gegeben ist.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Schere der in Rede stehenden Art in perspektivischer Darstellung, betreffend die Schließstellung;
- Fig. 2: die Schere in Ansicht;
- Fig. 3: eine weitere Ansichtsdarstellung der Schere;
- Fig. 4: den Schnitt gemäß der Linie IV-IV in Figur 3;
- Fig. 5: die Schere in Seitenansicht;
- Fig. 6: eine weitere perspektivische Darstellung der Schere, betreffend die Schließstellung;
- Fig. 6a: den vergrößert dargestellten Schnitt gemäß der Linie VIa-VIa in Fig. 6;
- Fig. 7: eine der Figur 6 entsprechende Darstellung, jedoch betreffend die Offenstellung;
- Fig. 8: eine der Figur 7 entsprechende Darstellung, jedoch eine Ausführungsform mit vorgesehenem Anschlagstift, betreffend eine Scherenoffenstellung;
- Fig. 9: eine perspektivische Darstellung der Schere gemäß Figur 8;
- Fig. 10: den Scherenkopf gemäß Figur 8 in der Schließstellung;
- Fig. 11: die Schere in einer perspektivischen Explosionsdarstellung;
- Fig. 12: in perspektivischer Darstellung die Schere in einer weiteren Ausführungsform;
- Fig. 13: den Schnitt gemäß der Linie XIII-XIII in Figur 12.

### Beschreibung der Ausführungsformen

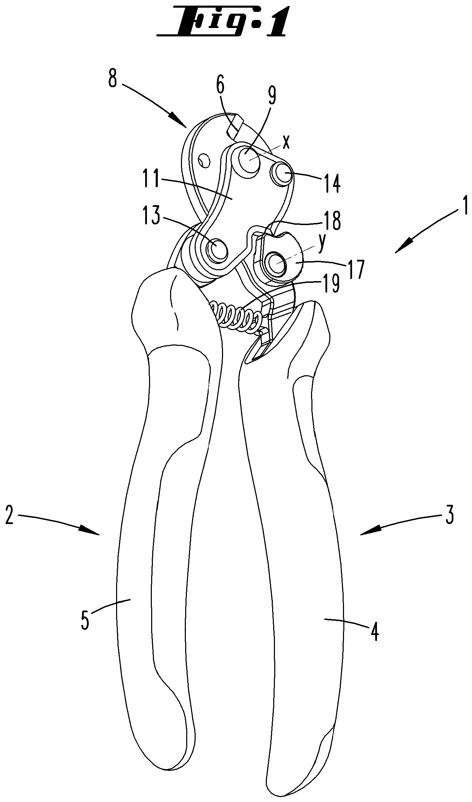

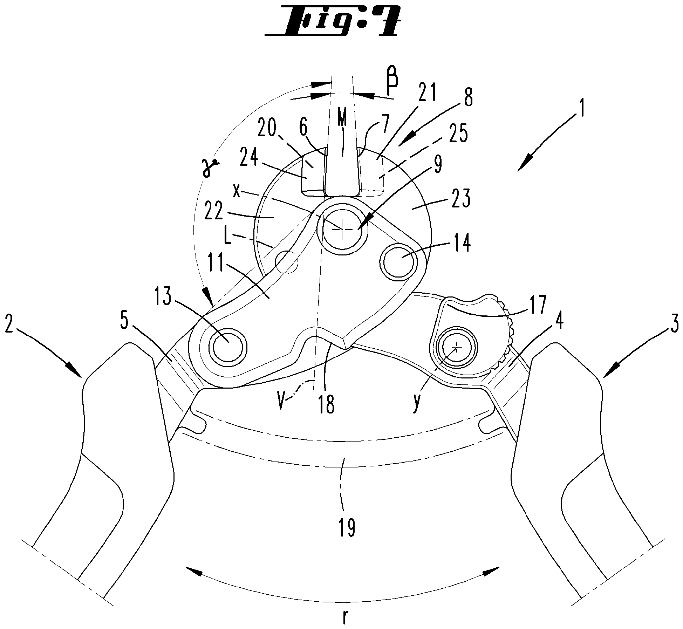

Dargestellt und beschrieben ist, zunächst mit Bezug zu Figur 1, eine Schere 1 mit zwei Scherenschenkeln 2, 3, wobei jeder Scherenschenkel 2, 3 in einem Endbereich einen Griffbereich 4 bzw. 5 ausformt und an dem zu dem Griffbereich 4, 5 abgewandten Endbereich Scherenkanten 6, 7. Die Endbereiche, welche die Scherenkanten 6 und 7 bilden, formen insgesamt einen Scherenkopf 8 mit einem in der Öffnungsstellung, vgl. etwa Figur 7, durch die Scherenkanten 6 und 7 begrenzten Scherenmaul M.

Die Scherenschenkel 2 und 3 sind in einem Drehgelenk 9 verbunden. Der hierzu bevorzugt vorgesehene Gelenkzapfen 10 erstreckt sich mit seiner geometrischen Drehachse x senkrecht zu der Schneidebene E. Die hieraus sich ergebende Drehrichtung eines der Scherenschenkel 2 oder 3 um die Drehachse x ist mit r bezeichnet (siehe Fig. 7)

Die den Griffbereichen 4, 5 abgewandten Endbereiche der Scherenschenkel 2, 3, welche die Scherenkanten 6 und 7 aufweisen, sind zum vollständigen Aneinander-Vorbeifahren im Zuge der Schließbewegung der Scherenkanten 6 und 7 in der Schneidebene E ausgebildet. Bevorzugt handelt es sich um eine plattenförmige Ausbildung der Endbereiche, wobei jeweilige Plattenränder als die genannten Scherenkanten 6 und 7 ausgeformt sind.

Die Scherenkanten 6 und 7 erstrecken sich bevorzugt ausschließlich in den den Griffbereichen 4 und 5 abgewandten Schenkelbereichen jenseits des Drehgelenkes 9 und weisen jeweils eine Länge 1 auf.

Die Scherenschenkel 2 und 3 sind bei bevorzugt weiter plattenartiger Ausbildung sich kreuzend im Drehgelenkbereich der zugewandten Flachseiten aufeinanderliegend angeordnet.

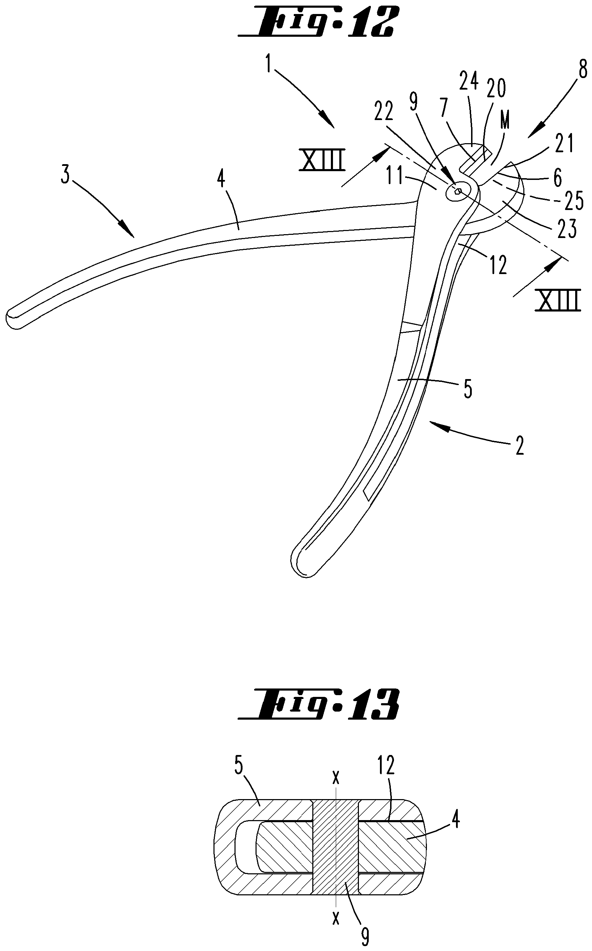

Einer der Scherenschenkel 2, 3 ist griffseitig zu dem Drehgelenk 9 beidseitig plattenartig abgestützt, in einem Übergriff zu dem anderen Scherenschenkel befindlich. Dies kann gemäß der Ausführungsform in den Figuren 12 und 13 gegeben sein durch einen entsprechend geschlitzten Scherenschenkel, durch welchen der andere Scherenschenkel hindurchgesteckt ist. Es ergibt sich so eine einteilige, bevorzugt materialeinheitliche Ausgestaltung beider Übergriffbereiche durch den einen Schenkel.

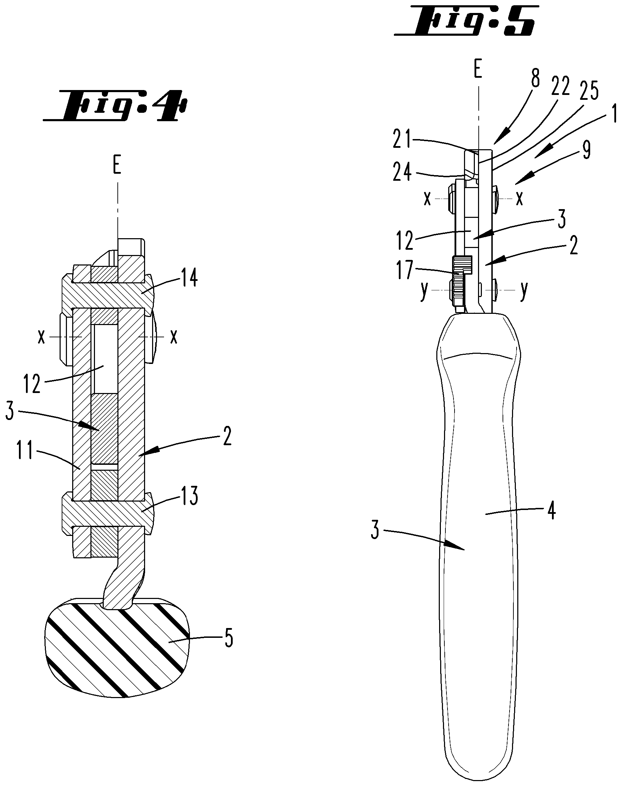

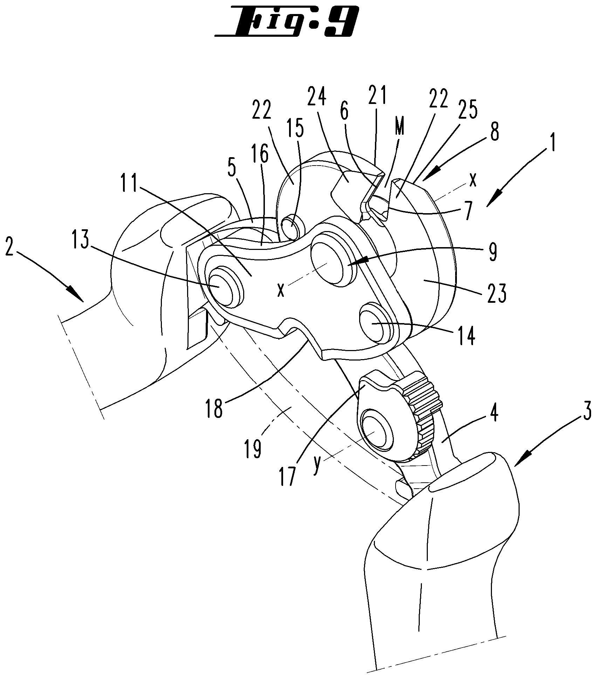

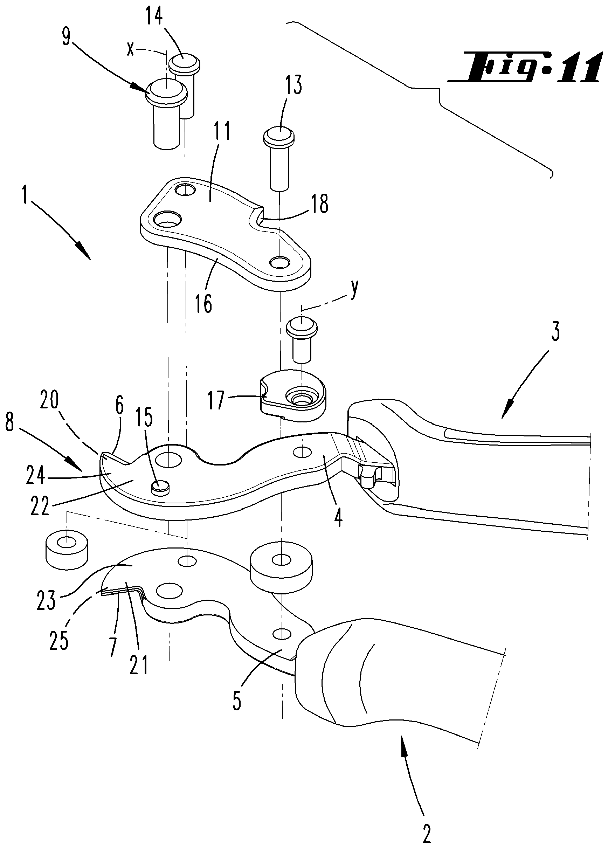

Alternativ kann, wie in den weiteren Darstellungen gemäß der Figuren 1 bis 11 dargestellt, eine den einen Scherenschenkel, hier den Scherenschenkel 3, abgewandt zu dem anderen Scherenschenkel, übergreifende Abstützplatte 11 vorgesehen sein. Diese Abstützplatte 11 ist in den dargestellten Ausführungsbeispielen mit dem Scherenschenkel 2, und zwar bevorzugt nur mit dem Scherenschenkel 2, verbunden unter Belassung eines Durchgreifschlitzes 12. Dieser Durchgreifschlitz 12 ist entsprechend begrenzt durch aufeinander zu weisende Flachseiten des Scherenschenkels 2 und der Abstützplatte 11, wobei eine in einer Erstreckungsrichtung der Drehachse x betrachtete Schlitzbreite c des Durchgreifschlitzes 12 bevorzugt der in selber Richtung betrachteten Dicke des anderen Scherenschenkels 3 im den Durchgreifschlitz 12 durchsetzenden Bereich im Wesentlichen entsprechen kann.

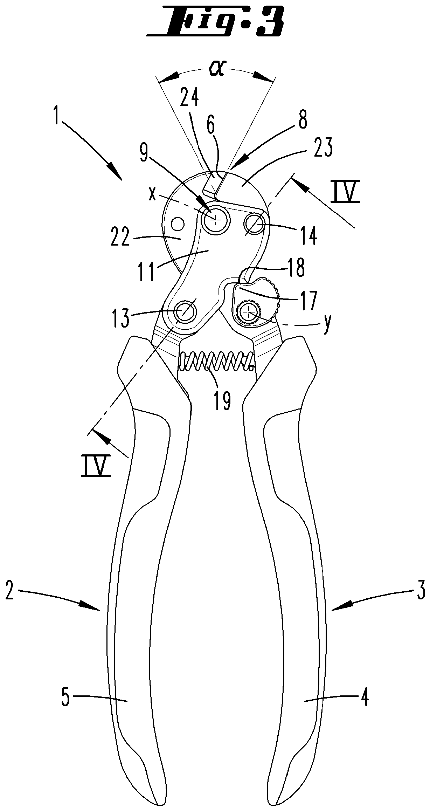

Die Abstützplatte 11 ist - bezogen auf eine Darstellung gemäß Figur 3 - unterhalb des Drehgelenkes 9 bevorzugt beidseitig des übergriffenen und abzustützenden Scherenschenkels 3 an dem Scherenschenkel 2 befestigt (Verbindungen 13, 14). Dargestellt ist eine Nietbefestigung.

Die Abstützplatte 11 kann in Richtung der Erstreckung der Drehachse x betrachtet eine Dicke aufweisen, die etwa der in selber Richtung gemessenen Dicke des Scherenschenkels 2 und/oder 3 im durchsetzten Bereich entsprechen kann, weiter etwa dem 0,5- bis 1,5-Fachen einer Schenkeldicke.

Weiter erstreckt sich die Abstützplatte 11 mit Abstand zum zugewandten Ende des Griffbereichs 5 des Scherenschenkels 2 beginnend bis in den Bereich des den Scherenkopf 8 mit bildenden Abschnitts des Scherenschenkels 2, dies unter Freihaltung des die Scherenkante 6 unmittelbar umgebenden Scherenkopfbereichs. Auch kann, wie dargestellt, die Abstützplatte 11 von dem Zapfen des Drehgelenks 9 durchsetzt sein.

Eine Breite b des abgestützten Scherenschenkels 3 im übergriffenen Bereich, d.h. im Bereich des Durchgreifschlitzes 12, gemessen quer zur Längserstreckung des Scherenschenkels 3, kann etwa dem 2- bis 4-Fachen der Länge 1 einer Scherenkante 6, 7 entsprechen.

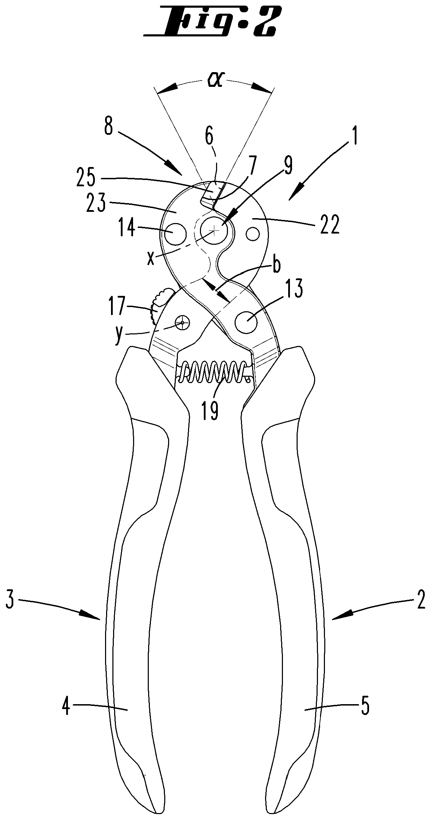

Wie aus den Darstellungen in den Figuren 2 und 3 zu erkennen, verlaufen die Scherenkanten 6 und 7 im geschlossenen Zustand der Schere 1 in einer Projektion in Richtung der Drehachse x des Drehgelenks 9 V-förmig sich öffnend, dies auch bedingt durch die Übereinanderlage der die Scherenkanten 6 und 7 aufweisenden Schenkelabschnitte. Es kann sich ein Winkel α von etwa 30° zwischen den Scherenkanten 6 und 7 einstellen.

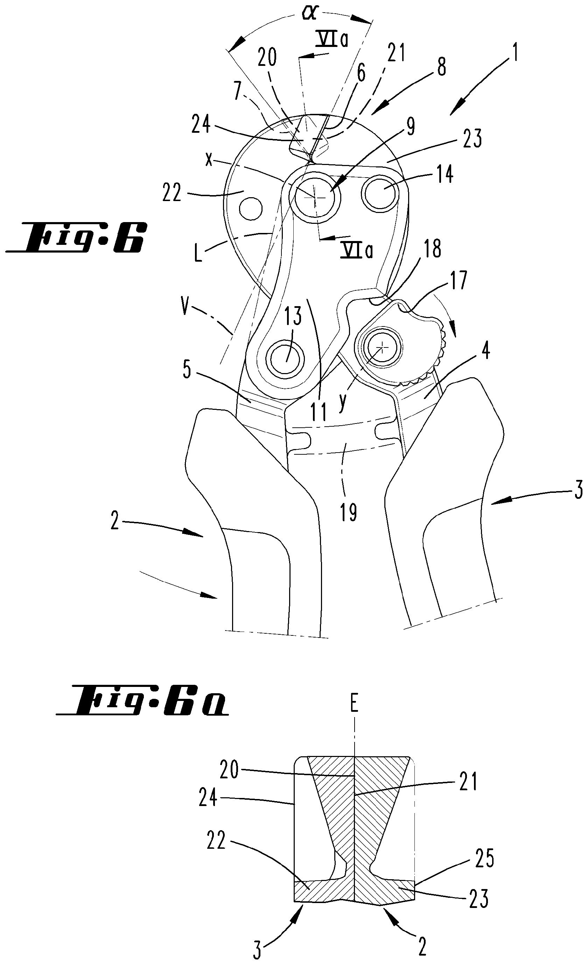

In der beispielsweise in Figur 6 dargestellten Scheren-Schließstellung liegen die in Ausrichtung der Drehachse x aufeinander zu weisenden Flächenbereiche 20 und 21 der die Scherenkanten 6 und 7 aufweisenden Schenkelabschnitte 22 und 23 aufgrund der sich in dieser Schließstellung einstellenden Übereinanderlage aneinander an, während in dieser Stellung die mit Bezug auf die Ausrichtung der Drehachse x nach axial außen weisenden Seiten 24 und 25 der die Scherenkanten 6 und 7 aufweisenden Schenkelabschnitte 22 und 23 freiliegen und somit zumindest in der Scheren-Schließstellung nicht überdeckt sind (vergl. auch Fig 6a).

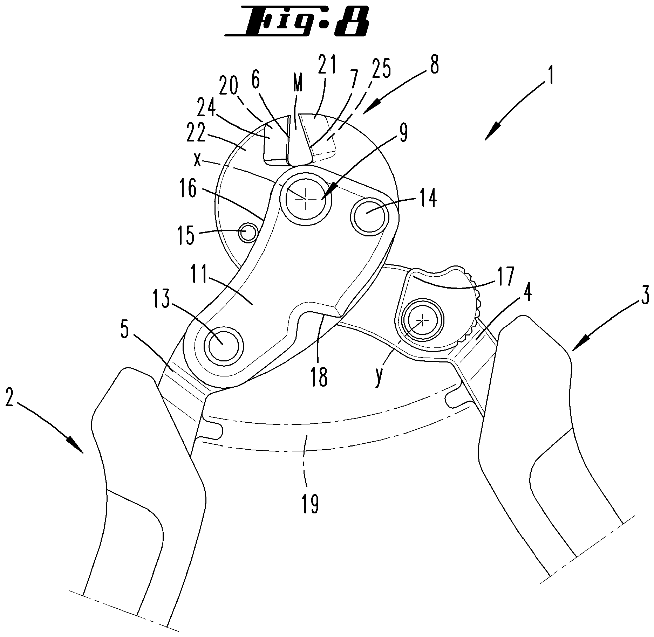

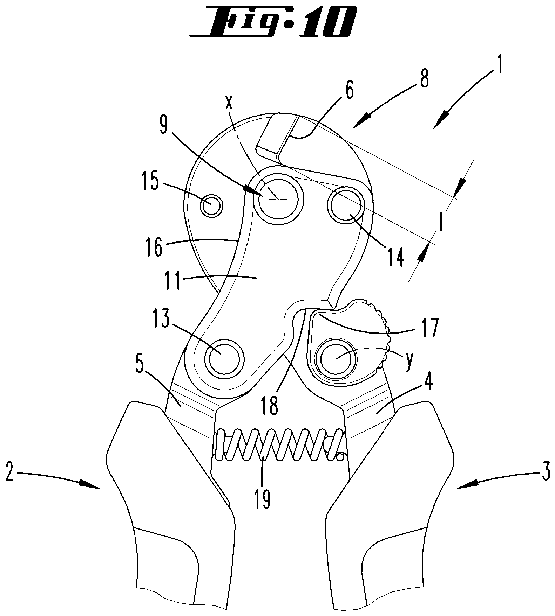

Wie weiter aus den Darstellungen in den Figuren 8 und 10 zu erkennen, kann in einem der Scherenschenkel, hier dem beidseitig abgestützten Scherenschenkel 3, ein Anschlagstift 15 angeordnet sein. Dieser erstreckt sich in Richtung der Drehachse x und wirkt mit einer zugewandten Randfläche 16 der Abstützplatte 11 anschlagbegrenzend zusammen, hierüber eine Öffnungsbegrenzung darstellend.

Darüber hinaus kann ein verschwenkbarer Verriegelungsvorsprung 17 vorgesehen sein. Auch dieser kann um eine gleich zur Drehachse x gerichtete Drehachse y an dem übergriffenen und abgestützten Scherenschenkel 3 angeordnet sein, zur Zusammenwirkung mit einer in der Abstützplatte 11 ausgeformten Stufe 18.

Auch kann zwischen dem Scherenschenkel 2, 3 auf die Griffbereiche 4, 5 in Richtung auf eine Griff-Spreizstellung einwirkend eine Rückstellfeder 19 vorgesehen sein.

In dieser Geschlossenstellung der Schere 1 schneidet, mit Bezug auf eine Ansicht gemäß Figur 6, in der sich die Drehachse x als Punkt darstellt, eine gedachte Verlängerung V der Schneide 6 des Scherenschenkels 3 eine gedachte Linie L der Abstützplatte 11. Diese Linie L stellt eine gedachte kürzeste Verbindung der Umrisslinie der Abstützplatte 11 in dieser Ansicht zwischen dem die Verbindung 13 aufweisenden Bereich der Abstützplatte 11 und dem das Drehgelenk 9 aufweisenden Bereich der Abstützplatte 11 dar. Die Verlängerung V schneidet diese Linie L mit Bezug auf die Abstützplatte 11 von innen nach außen, wobei die Verlängerung V zu der Linie L einen spitzen Winkel von bis zu bspw. 15° einschließen kann, weiter bspw. 5 bis 10°.

In der Offenstellung gemäß Figur 7 schließen die Schneiden 6 und 7 in der vorbeschriebenen Ansicht einen spitzen Winkel β von etwa 75 bis 89° zueinander ein, so weiter bspw. etwa 80 bis 85°. Die gedachte Verlängerung V der Schneide 6 durchsetzt die Abstützplatte 11, hierbei etwa das Drehgelenk 9 tangierend, wobei weiter die Schneide 6 in dieser Offenstellung einen stumpfen Winkel γ zu der vorbeschriebenen Linie L von etwa 120 bis 150°, weiter bspw. etwa 135°, einschließt.

Auch die Schneide 7 des Scherenschenkels 2 schließt zu der ihr zugewandten Randlinie der Abstützplatte 11 einen stumpfen Winkel von etwa 120 bis 150° ein. Dieser stumpfe Winkel verändert sich jedoch im Gegensatz zu dem stumpfen Winkel γ nicht im Zuge der Schwenkverlagerung der Scherenschenkel, da der Scherenschenkel 2 mit der Schneide 7 drehfest mit der Abstützplatte 11 verbunden ist.

**Liste der Bezugszeichen**

| | | | |
|---|---|---|---|
| 1 | Schere | b | Breite |
| 2 | Scherenschenkel | c | Schlitzbreite |
| 3 | Scherenschenkel | 1 | Länge |
| 4 | Griffbereich | r | Drehrichtung |
| 5 | Griffbereich | x | Drehachse |
| 6 | Scherenkante | y | Drehachse |
| 7 | Scherenkante | | |
| 8 | Scherenkopf | E | Schneidebene |
| 9 | Drehgelenk | L | Linie |
| 10 | Gelenkzapfen | M | Scherenmaul |
| 11 | Abstützplatte | V | Verlängerung |
| 12 | Durchgreifschlitz | | |
| 13 | Verbindung | α | Winkel |
| 14 | Verbindung | β | Winkel |
| 15 | Anschlagstift | γ | Winkel |
| 16 | Randfläche | | |
| 17 | Verriegelungsvorsprung | | |
| 18 | Stufe | | |
| 19 | Rückstellfeder | | |
| 20 | Flächenbereich | | |
| 21 | Flächenbereich | | |
| 22 | Schenkelabschnitt | | |
| 23 | Schenkelabschnitt | | |
| 24 | Seite | | |
| 25 | Seite | | |

## Patentansprüche

1. Schere (1) mit zwei Scherenschenkeln (2, 3), die jeweils an ihrem einen Ende einen Griffbereich (4, 5) aufweisen und an ihrem anderen Ende eine Scherenkante (6, 7), wobei die Scherenschenkel (2, 3) weiter in einem Drehgelenk (9) verbunden sind, mit einem feststehenden Scherenschenkel (2, 3), der bei einer Öffnungs- und Schließbewegung relativ zu dem Drehgelenk (9) feststehend ist, und einem beweglichen Scherenschenkel (3, 2), wobei die Scherenschenkel (2, 3) anschlagbegrenzt zwischen einer Öffnungs- und einer Schließstellung bewegbar sind und die Scherenkanten (6, 7) in der Schließstellung über im Wesentlichen ihrer gesamten Länge (1) aneinander vorbei bewegt sind, **dadurch gekennzeichnet, dass** der feststehende oder der bewegliche Scherenschenkel (2, 3) zu dem beweglichen oder dem feststehenden Scherenschenkel (3, 2) griffseitig zu dem Drehgelenk (9) beidseitig plattenartig abstützend in einem Übergriff zu dem beweglichen bzw. feststehenden Scherenschenkel (2, 3) verläuft, wobei die Scherenschenkel (2, 3) weiter in der Schließstellung in dem übereinander gefahrenen Bereich jeweils aneinander liegende Flächenbereiche (20, 21) aufweisen und auf der gegenüberliegenden Seite (24, 25) jeweils freiliegend sind, und dass die Abstützung durch eine zweifache Verbindung (13,14) des in Breitenrichtung des abgestützten Schenkels diesen auf einer Breitseite übergreifenden plattenartigen Bereichs mit dem abstützenden Scherenschenkel erreicht ist.

2. Schere (1) mit zwei Scherenschenkeln (2, 3), die jeweils an ihrem einen Ende einen Griffbereich (4,5) aufweisen und an ihrem anderen Ende eine Scherenkante (6, 7), wobei die Scherenschenkel (2, 3) weiter in einem Drehgelenk (9) verbunden sind, mit einem feststehenden Scherenschenkel (2,3), der bei einer Öffnungs- und Schließbewegung relativ zu dem Drehgelenk (9) feststehend ist, und einem beweglichen Scherenschenkel (3, 2), wobei die Scherenschenkel (2, 3) anschlagbegrenzt zwischen einer Öffnungs- und einer Schließstellung bewegbar sind und die Scherenkanten (6, 7) in der Schließstellung über im Wesentlichen ihre gesamten Länge (1) aneinander vorbei bewegt sind, **dadurch gekennzeichnet, dass** der feststehende oder der bewegliche Scherenschenkel (2, 3) zu dem beweglichen oder dem feststehenden Scherenschenkel (3, 2) griffseitig zu dem Drehgelenk (9) beidseitig plattenartig abstützend in einem Übergriff zu dem beweglichen bzw. feststehenden Scherenschenkel (2, 3) verläuft, wobei die Scherenschenkel (2, 3) weiter in der Schließstellung in dem übereinander gefahrenen Bereich jeweils aneinander liegende Flächenbereiche (20, 21) aufweisen und auf der gegenüberliegenden Seite (24, 25) jeweils freiliegend sind und dass eine den einen Scherenschenkel (3) abgewandt zu dem anderen Scherenschenkel (2) übergreifende Abstützplatte (11) vorgesehen ist, dass die Abstützplatte (11) mit dem anderen Scherenschenkel (2) unter Belassung eines Durchgreifschlitzes (12) verbunden ist, wobei der Durchgreifschlitz (12) durch aufeinander zuweisende Flachseiten des anderen Scherenschenkels (2) und der Abstützplatte (11) begrenzt ist, wobei eine in einer Erstreckungsrichtung einer Drehachse (x) betrachtete Schlitzbreite (c) des Durchgreifschlitzes (12) der in selber Richtung betrachteten Dicke des anderen Scherenschenkels (3) in dem den Durchgreifschlitz (12) durchsetzenden Bereich im Wesentlichen entspricht und das an dem einen Scherenschenkel (3) ein Anschlagstift (15) angeordnet ist, der sich in Richtung der Drehachse (x) erstreckt und mit einer zugewandten Randfläche der Abstützplatte (11) anschlagbegrenzend zusammenwirkt.

3. Schere nach einem der vorhergehenden Ansprüche, **dadurch gekennzeichnet, dass** in der Schließstellung in einer Projektion in Richtung einer Drehachse (x) des Drehgelenks (9) die Scherenkanten (6, 7) V-förmig öffnend verlaufen.

4. Schere nach einem der vorhergehenden Ansprüche, **dadurch gekennzeichnet, dass** die Länge (1) einer Scherenkante (6, 7), welche die andere Scherenkante (7, 6) im geschlossenen Zustand überfahren hat, kleiner ist als eine quer zu einer Längserstreckung des abgestützten Schenkels in dem abgestützten Bereich gemessene größte Breite (b), über welche der abgestützte Schenkel beidseitig abgestützt ist.

5. Schere nach Anspruch 2, **dadurch gekennzeichnet, dass** die Abstützung durch eine zweifache Verbindung (13, 14) des in Breitenrichtung des abgestützten Schenkels diesen auf einer Breitseite übergreifenden plattenartigen Bereichs mit dem abstützenden Scherenschenkel erreicht ist.

6. Schere nach einem der Ansprüche 1 oder 5, **dadurch gekennzeichnet, dass** die Verbindung mindestens je einmal auf jeder Seite des abgestützten Schenkels gegeben ist.

7. Schere nach einem der Ansprüche 1 oder 5, **dadurch gekennzeichnet, dass** die Verbindung nur auf einer Seite des abgestützten Schenkels gegeben ist.

## Claims

1. Shears (1) having two limbs (2, 3), each of which comprises a handle region (4, 5) at one end and a cutting edge (6, 7) at the other end, wherein the limbs (2, 3) are further connected to each other at a revolute joint (9), with one fixed limb (2, 3) that is fixed relative to the revolute joint (9) during an opening and closing movement, and one movable limb (3, 2), wherein the limbs (2, 3) can move between an open position and a closed position while being limited by a stop, and the cutting edges (6, 7) pass each other over substantially their entire length (1) in the closed position, **characterized in that** the fixed or movable limb (2, 3) extend relative to the movable or fixed limb (3, 2) on the handle side of the revolute joint (9) such that it is supported in a planar manner on both sides in a region of overlap with the movable or fixed limb (2, 3), wherein the limbs (2, 3) comprise surface regions (20, 21) that rest against one another in the region in which they are on top of each other in the closed state, and are each exposed on the opposite side (24, 25), and that the support is achieved via a double connection (13, 14) between the plate-like region that overlaps the supported limb in its width direction on a broad side and the supporting limb.

2. Shears (1) having two limbs (2, 3), each of which comprises a handle region (4, 5) at one end and a cutting edge (6, 7) at the other end, wherein the limbs (2, 3) are further connected to each other at a revolute joint (9), with one fixed limb (2, 3) that is fixed relative to the revolute joint (9) during an opening and closing movement, and one movable limb (3, 2), wherein the limbs (2, 3) can move between an open position and a closed position while being limited by a stop, and the cutting edges (6, 7) pass each other over substantially their entire length (1) in the closed position, **characterized in that** the fixed or movable limb (2, 3) extend relative to the movable or fixed limb (3, 2) on the handle side of the revolute joint (9) such that it is supported in a planar manner on both sides in a region of overlap with the movable or fixed limb (2, 3), wherein the limbs (2, 3) comprise surface regions (20, 21) that rest against one another in the region in which they are on top of each other in the closed state, and are each exposed on the opposite side (24, 25), and that a support plate (11) that overlaps the one limb (3) facing away from the other limb (2) is provided, that the support plate (11) is connected with the other limb (2) while leaving a penetration slot (12), wherein the penetration slot (12) is bounded by facing flat sides of the other limb (2) and support plate (11), wherein a slot width (c) of the penetration slot (12) viewed in a direction of extension of a rotational axis (x) essentially corresponds to the thickness of the other limb (3) viewed in the same direction in the region passing through the penetration slot (12), and that a stop pin (15) is arranged on the one limb (3), extending in the direction of the rotational axis (x), and interacting with a facing edge surface of the support plate (11) in a stop-limiting manner.

3. The shears according to one of the preceding claims, **characterized in that** the cutting edges (6, 7) open in a V shape in the closed state in a projection in the direction of a rotational axis (x) of the revolute joint (9) .

4. The shears according to one of the preceding claims, **characterized in that** the length (1) of one cutting edge (6, 7) which the other cutting edge (7, 6) has passed over in the closed state is smaller than a largest width (b) measured transverse to a longitudinal extension of the supported limb in the supported region, over which the supported limb is supported on both sides.

5. The shears according to claim 2, **characterized in that** support is achieved via a double connection (13, 14) between the plate-like region that overlaps the supported limb in its width direction on a broad side and the supporting limb.

6. The shears according to one of the claims 1 or 5, **characterized in that** the connection is provided at least once on each respective side of the supported limb.

7. The shears according to one of the claims 1 or 5, **characterized in that** the connection is only provided on one side of the supported limb.

## Revendications

1. Ciseaux (1) avec deux branches de ciseaux (2, 3), qui présentent chacune une région de poignée (4, 5) à une extrémité et une arête de ciseaux (6, 7) à l'autre extrémité, les branches de ciseaux (2, 3) étant en outre reliées dans une articulation de pivotement (9), avec une branche de ciseaux fixe (2, 3) qui est fixe par rapport à l'articulation pivotante (9) pendant un mouvement d'ouverture et de fermeture et une branche de ciseaux mobile (3, 2), les branches de ciseaux (2, 3) pouvant être déplacées de manière limitée entre une position d'ouverture et une position de fermeture et les arêtes de ciseaux (6, 7) étant déplacées l'une au-delà de l'autre sur sensiblement toute leur longueur (1) dans la position de fermeture, **caractérisés en ce que** la branche de ciseaux fixe ou mobile (2, 3) s'étend en chevauchant la branche mobile ou fixe (2, 3) du côté poignée par rapport à l'articulation pivotante (9) de manière à venir en support à la façon d'une plaque des deux côtés de la branche mobile ou fixe (3, 2) et **en ce que** les branches de ciseaux (2, 3) présentent en outre, en position fermée, des zones de surface (20, 21) qui s'appuient respectivement l'une contre l'autre dans la zone de superposition et qui sont respectivement dégagées sur le côté opposé (24, 25), et **en ce que** le support est obtenu par une double liaison (13, 14) de la zone en forme de plaque qui chevauche dans la direction de la largeur un côté large de la branche supportée, avec la branche de ciseaux venant en support.

2. Ciseaux (1) avec deux branches de ciseaux (2, 3) qui présentent chacune une région de poignée (4, 5) à une extrémité et une arête de ciseaux (6, 7) à l'autre extrémité, les branches de ciseaux (2, 3) étant en outre reliées dans une articulation pivotante (9), avec une branche de ciseaux fixe (2, 3) qui est fixe par rapport à l'articulation pivotante (9) pendant un mouvement d'ouverture et de fermeture et une branche de ciseaux mobile (3, 2), les branches de ciseaux (2, 3) étant mobiles de manière limitée entre une position d'ouverture et une position de fermeture, et les arêtes de ciseaux (6, 7) étant déplacées l'une au-delà de l'autre sur sensiblement toute leur longueur (1) dans la position de fermeture, **caractérisés en ce que** la branche de ciseaux fixe ou mobile (2, 3) s'étend en chevauchant la branche mobile ou fixe (2, 3) du côté poignée par rapport à l'articulation pivotante (9) de manière à venir en support à la façon d'une plaque des deux côtés de la branche mobile ou fixe (3, 2) et **en ce que** les branches de ciseaux (2, 3) présentent en outre, en position fermée, des zones de surface (20, 21) qui s'appuient respectivement l'une contre l'autre dans la zone de superposition et qui sont respectivement dégagées sur le côté opposé (24, 25), et **en ce qu'**il est prévu une plaque d'appui (11) qui chevauche l'une des branches de ciseaux (3) à l'opposé de l'autre branche de ciseaux (2), **en ce que** la plaque d'appui (11) est reliée à l'autre branche de ciseaux (2) en laissant une fente de passage (12), la fente de passage (12) étant délimitée par des côtés plats se faisant face de l'autre branche de ciseaux (2) et de la plaque de support (11), une largeur de fente (c) de la fente de passage (12), considérée dans une direction d'extension d'un axe de rotation (x), correspondant sensiblement à l'épaisseur, considérée dans la même direction, de l'autre branche de ciseaux (3) dans la région passant par la fente de passage (12), et **en ce qu'**est agencée sur l'une des branches de ciseaux (3) une broche de butée (15) qui s'étend dans la direction de l'axe de rotation (x) et coopère en limitation par butée avec une surface de bord en regard de la plaque de support (11).

3. Ciseaux selon l'une des revendications précédentes, **caractérisés en ce que** dans une projection dans la direction d'un axe de rotation (x) de l'articulation pivotante (9), les arêtes de ciseaux (6, 7) en position fermée s'étendent en s'ouvrant en forme de V.

4. Ciseaux selon l'une des revendications précédentes, **caractérisés en ce que** la longueur (1) d'une arête de ciseaux (6, 7) qui à l'état fermé est passée au-delà de l'autre arête de ciseaux (7, 6) est inférieure à une plus grande largeur (b), mesurée transversalement à une extension longitudinale de la branche supportée dans la zone de support, sur laquelle la branche supportée est supportée des deux côtés.

5. Ciseaux selon la revendication 2, **caractérisés en ce que** le support est obtenu par une double liaison (13, 14) de la zone en forme de plaque qui chevauche dans la direction de la largeur un côté large de la branche supportée, avec la branche de ciseaux venant en support.

6. Ciseaux selon l'une des revendications 1 ou 5, **caractérisés en ce que** la liaison est prévue au moins une fois de chaque côté de la branche supportée.

7. Ciseaux selon l'une des revendications 1 ou 5, **caractérisés en ce que** la liaison est prévue seulement sur un côté de la branche supportée.
